## Europäisches Patentamt
## European Patent Office
## Office européen des brevets

(19)

(11) Veröffentlichungsnummer : **0 038 953**
**B1**

(12)

# EUROPÄISCHE PATENTSCHRIFT

(45) Veröffentlichungstag der Patentschrift :
30.03.83

(21) Anmeldenummer : 81102480.1

(22) Anmeldetag : 02.04.81

(51) Int. Cl.³ : **F 16 L    3/00**, H 02 G 11/06,
**F 16 G  13/16**

(54) **Energieleitungsträger.**

(30) Priorität : 24.10.80 DE 3040076
30.04.80 DE 3016603

(43) Veröffentlichungstag der Anmeldung :
04.11.81 Patentblatt 81/44

(45) Bekanntmachung des Hinweises auf die Patenterteilung : 30.03.83 Patentblatt 83/13

(84) Benannte Vertragsstaaten :
AT BE CH DE FR GB IT LI NL SE

(56) Entgegenhaltungen :
DE A 1 817 593
DE A 2 622 005
DE A 2 853 715
GB A 2 014 268
US A 2 823 703
US A 3 330 105

(73) Patentinhaber : Kabelschlepp Gesellschaft mit beschränkter Haftung
Marienborner Strasse 75
D-5900 Siegen 1 (DE)

(72) Erfinder : Moritz, Werner
Wetzlarer Strasse 122
D-5900 Siegen 1 (DE)

(74) Vertreter : Stenger, Alex, Dipl.-Ing. et al
Patentanwälte Dipl.-Ing. A. Stenger Dipl.-Ing. W.
Watzke Dipl.-Ing. H.J. Ring Kaiser-Friedrich-Ring 70
D-4000 Düsseldorf 11 (DE)

EP 0 038 953 B1

Energieleitungsträger

Die Erfindung betrifft einen Energieleitungsträger für die Anordnung zwischen einem beweglichen Verbraucher und einem ortsfesten Anschluß, bestehend aus engen Rohrgliedern mit nach außen gerichteten Anschlägen und weiten Rohrgliedern mit nach innen gerichteten Anschlägen, die sich hintergreifen und nur in einer Richtung gegeneinander abwinkelbar sind, wobei die engen Rohrglieder in ihrer Mittelebene einen umlaufenden Anschlagring besitzen, auf dessen beiden Seiten zu den anderen Anschlägen hin Rinnen für den Eingriff der Anschläge an den weiten Rohrgliedern gebildet sind, und wobei die weiten Rohrglieder im Bereich einer Querschnittshälfte etwa um die Breite einer Rinne beidseitig verkürzt sind und aus zwei auf die engen Rohrglieder aufschiebbaren Rohrgliedhälften zusammengesetzt sind.

Aus der DE-B-28 05 832 und der DE-A-28 53 715 ist ein Energieleitungsträger der vorstehend beschriebenen Gattung bekannt. Bei diesem Energieleitungsträger besitzen die engen Rohrglieder in ihrer Mittelebene einen umlaufenden Anschlagring und sind symmetrisch ausgebildet, während die weiten Rohrglieder in Längsrichtung des Energieleitungsträgers gesehen beiderseits um die Breite einer Rinne verkürzt sind, damit der Energieleitungsträger aus der gestreckten Lage nur zu einer Seite hin gekrümmt werden kann. In der gestreckten Lage liegen die Anschläge der weiten Rohrglieder oberhalb der von der neutralen Faser gebildeten Mittelebene dem umlaufenden Anschlagring und unterhalb dieser Mittelebene den äußeren Anschlägen der engen Rohrglieder an, und zwar auf ihrer gesamten Länge, weil in dieser Strecklage die Anschläge an den engen und weiten Rohrgliedern parallel zueinander verlaufen. In der gekrümmten Endlage dagegen stützen sich die Anschläge der weiten Rohrglieder oberhalb der von der neutralen Faser gebildeten Mittelebene nur in ihrem mittleren Bereich an den äußeren Anschlägen und unterhalb dieser Ebene auf der gegenüberliegenden Seite im mittleren Bereich an dem umlaufenden Anschlagring der engen Rohrglieder ab, weil in dieser gekrümmten Lage die Anschläge an den einander gegenüberliegenden Seitenwänden des Energieleitungsträgers im spitzen Winkel zueinander verlaufen. Infolgedessen ist die Tragfähigkeit des Energieleitungsträgers im Krümmungsbereich vermindert, in dem er durch das Gewicht des oberen, gestreckten Trums gerade am stärksten belastet wird, weil die auftretenden Biegekräfte nur von den verhältnismäßig schmalen Überlappungsbereichen zwischen den Anschlägen im mittleren Bereich an der Außen- und Innenseite übertragen werden müssen.

Davon ausgehend liegt der Erfindung die Aufgabe zugrunde, einen Energieleitungsträger der eingangs beschriebenen Gattung mit einer verbesserten Tragfähigkeit und einer guten Seiten- und Verdrehsteifigkeit zu schaffen, bei dem die neutrale Faser in der Mitte liegt und die Anschläge der weiten Rohrglieder auch in der gekrümmten Endlage an den Anschlägen bzw. dem Anschlagring der engen Rohrglieder zur Anlage kommen.

Als technische Lösung dieser Aufgabe wird vorgeschlagen, daß der mittlere Anschlagring der engen Rohrglieder im Bereich der breiten Rohrgliedhälften parallele Flanken und im Bereich der schmalen Rohrgliedhälften an beiden Schenkeln zur neutralen Faser hin konisch auseinanderlaufende Flanken besitzt und daß die äußeren Anschläge der engen Rohrglieder im Bereich der breiten Rohrgliedhälfte an beiden Schenkeln von außen nach innen zur neutralen Faser hin konisch auf den mittleren Anschlagring zulaufende Flanken und im Bereich der schmalen Rohrgliedhälften parallel zueinander verlaufende Flanken besitzen.

Bei einer praktischen Ausführungsform hat es sich als zweckmäßig erwiesen, die Breite der Rinnen an den engen Rohrgliedern beiderseits des mittleren Anschlagringes unmittelbar über bzw. unter der neutralen Faser nur noch gerade so groß zu machen, wie es der Dicke des Materials der weiten Rohrglieder entspricht. Wenn es sich erforderlich erweisen sollte, den Krümmungsradius des Energieleitungsträgers innerhalb einer bestimmten Größe zu verändern, dann kann das durch eine Änderung der Breite der äußeren Anschläge im Bereich der breiten Rohrgliedhälfte und des Anschlagringes im Bereich der schmalen Rohrgliedhälfte an den engen Rohrgliedern geschehen.

Ein erfindungsgemäß ausgebildeter Energieleitungsträger hat den Vorteil, daß die Anschläge der weiten Rohrglieder auch in der gekrümmten Endlage auf ihrer gesamten Länge an den äußeren Anschlägen bzw. dem mittleren Anschlagring der engen Rohrglieder zur Anlage kommen. Dadurch werden die von den schmalen Überlappungsbereichen der Anschläge an den engen und weiten Rohrgliedern zu übertragenden Kräfte auf eine größere Fläche verteilt und ein Aufbiegen der Umkantungen der weiten Rohrglieder, ganz besonders in den Bogenteilen der Rohrgliedhälften erschwert. Ein erfindungsgemäß ausgebildeter Energieleitungsträger ist deshalb in der Lage, größere Gewichte aufzunehmen, ohne daß die Rohrglieder im Krümmungsbereich auseinanderplatzen bzw. sich aufbiegen.

Für eine ausreichende Seiten- und Verdrehsteifigkeit bei übergroßen Längen hat es sich als zweckmäßig erwiesen, an der Ober- und Unterseite der engen Rohrglieder Schlitze anzuordnen und Bänder einzuziehen. In besonderen Anwendungsfällen kann es aber auch sinnvoll sein, weitere Zwischenbänder einzuziehen, um den Innenraum des Energieleitungsträgers in verschiedene Stockwerke für dicke und dünnere Kabel oder für Kabel und Schläuche aufzuteilen, damit diese beim bestimmungsgemäßen Gebrauch nicht ineinanderrutschen und/oder sich umeinanderdrehen.

Die Schlitze sollten zweckmäßig in der Mitte eng und zum Ein- und Austritt hin erweitert sein, damit die Bänder im Krümmungsradius nicht geknickt werden. Die Bänder selbst können sowohl aus Stahl als auch aus einem steifen aber auch elastischen Kunststoff hergestellt sein.

Ein erfindungsgemäß ausgebildeter Energieleitungsträger hat in der Ausführungsform mit je einem an der Oberseite und an der Unterseite eingezogenen Band auch auf großen Längen eine außerordentlich gute Seiten- und Verdrehsteifigkeit. Er kann deshalb auch bei Belastung mit hohen Gewichten eine größere freitragende Länge überbrücken.

Weitere Einzelheiten des Gegenstandes der Erfindung ergeben sich aus der nachfolgenden Beschreibung der zugehörigen Zeichnungen, in denen eine bevorzugte Ausführungsform des Energieleitungsträgers schematisch dargestellt worden ist. In den Zeichnungen zeigen :

Figur 1 einige miteinander verbundene Rohrglieder eines Energieleitungsträgers in Seitenansicht ;

Figur 2 dieselben Rohrglieder in Draufsicht ;

Figur 3 ein enges Rohrglied im Grundriß ;

Figur 4 dasselbe Rohrglied in Ansicht von unten ;

Figur 5 dasselbe Rohrglied in Draufsicht ;

Figur 6 dasselbe Rohrglied in Seitenansicht ;

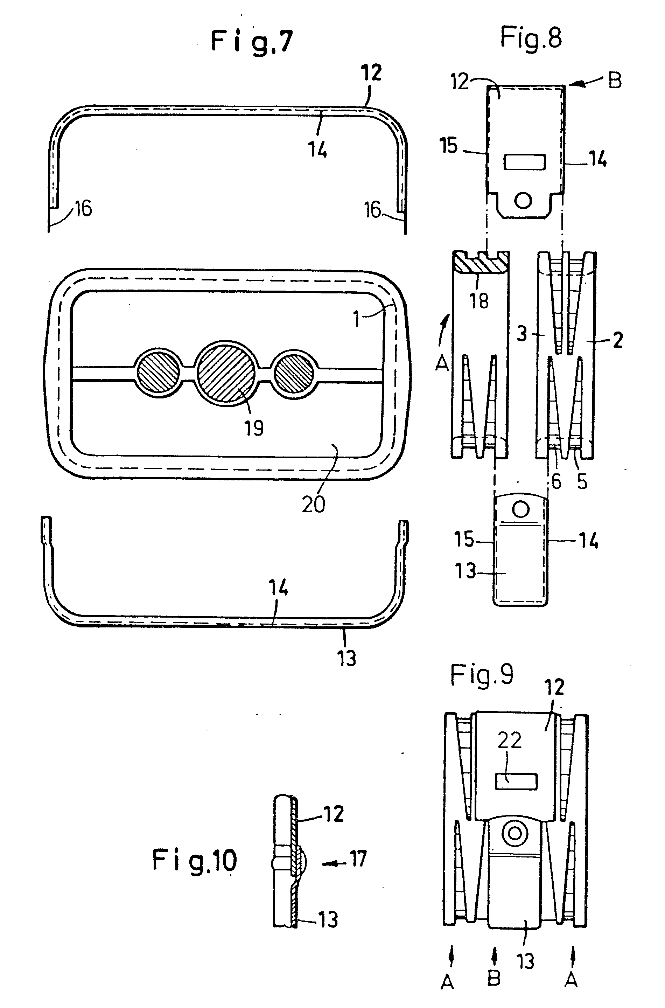

Figur 7 ein Sprengbild von zwei engen Rohrgliedern und einem noch getrennten weiten Rohrglied im Grundriß ;

Figur 8 dasselbe Sprengbild gemäß Fig. 7 in Seitenansicht ;

Figur 9 zwei mittels eines weiten Rohrgliedes miteinander verbundene enge Rohrglieder in Seitenansicht ;

Figur 10 eine Verbindung für die beiden Rohrgliedhälften der weiten Rohrglieder mit einem Spreizniet im Querschnitt ;

Figur 11 ein Funktionsschema für einen selbsttragenden Energieleitungsträger zwischen einem beweglichen Verbraucher und einem ortsfesten Anschluß ;

Figur 12 eine weitere Ausführungsform eines engen Rohrgliedes mit Schlitzen für ein einziehbares Band im Grundriß ;

Figur 13 ein gemäß Fig. 12 abgewandeltes enges Rohrglied mit in mehreren Stockwerken eingezogenen Bändern im Grundriß.

Ein erfindungsgemäß ausgebildeter Energieleitungsträger besteht aus einer wechselnden Folge von engen Rohrgliedern A und weiten Rohrgliedern B, die formschlüssig zusammengesteckt sind und auf der gestreckten Lage nur zu einer Seite hin gegeneinander verschwenkt werden können, während sie in der gestreckten Lage einen starren Rohrstrang bilden.

Jedes enge Rohrglied A besteht in der dargestellten Ausführungsform aus einem Ring 1 mit rechteckiger Querschnittsform, der am äußeren Umfang zwei von äußeren Anschlägen 2, 3 und einem mittleren, umlaufenden Anschlagring 4 begrenzte Rinnen 5 und 6 bildet. Oberhalb und unterhalb einer von der neutralen Faser 7 gebildeten Mittelebene sind die beiden Rinnen 5 und 6 an der Ober- und Unterseite gleich breit, aber an den Seitenwänden des engen Rohrgliedes A konisch zulaufend ausgebildet. In der oberen Hälfte ist der mittlere Anschlagring 4 schmal ausgebildet und besitzt parallel zueinanderverlaufende Flanken 8 und 9. In der unteren Hälfte ist der mittlere Anschlagring 4 dagegen nur im mittleren Bereich schmal und mit parallel zueinander verlaufenden Flanken 8' und 9' ausgebildet, während letztere an den seitlichen Schenkeln von außen nach innen zur neutralen Faser 7 hin konisch auseinanderlaufen. Die äußeren Anschläge 2 und 3 sind dagegen in der unteren Hälfte mit parallel zueinander verlaufenden Flanken 10 und 11 versehen, während in der oberen Hälfte die Flanken 10' und 11' an den seitlichen Schenkeln von außen nach innen zum mittleren Anschlag 4 und zur neutralen Faser 7 hin konisch verlaufen. Durch diese unterschiedliche Ausbildung des Verlaufes der Flanken 8 bis 11 an den äußeren Anschlägen 2, 3 und dem mittleren Anschlagring 4 der engen Rohrglieder A beiderseits der neutralen Faser 7 ergeben sich unterschiedliche Formgestaltungen, deren Bedeutung nachfolgend im Zusammenhang mit der Formgestaltung der weiten Rohrglieder B beschrieben wird.

Jedes weite Rohrglied B besteht in der dargestellten Ausführungsform aus zwei Rohrgliedhälften 12 und 13 mit U-förmiger Formgestaltung. Die obere Rohrgliedhälfte 12 ist um das Maß der Breite der beiden Rinnen 5 und 6 breiter als die untere Rohrgliedhälfte 13. Dadurch verspringt die untere Rohrgliedhälfte 13 im Bereich der neutralen Faser 7 auf jeder Seite um die Breite einer Rinne 5, 6 nach innen. An ihren Rändern besitzen die beiden Rohrgliedhälften 12 und 13 nach innen gerichtete Anschläge 14 und 15, welche in die Rinnen 5 und 6 an den engen Rohrgliedern A eingreifen.

An jedem Schenkel einer äußeren Rohrgliedhälfte 12 ist ein Ansatz 16 vorgesehen, der im zusammengesteckten Zustand von den Enden der Schenkel der anderen Rohrgliedhälfte 13 überlappt wird. Die Verbindung zwischen den beiden Rohrgliedhälften 12 und 13 erfolgt im Überlappungsbereich mit einem Spreizniet 17.

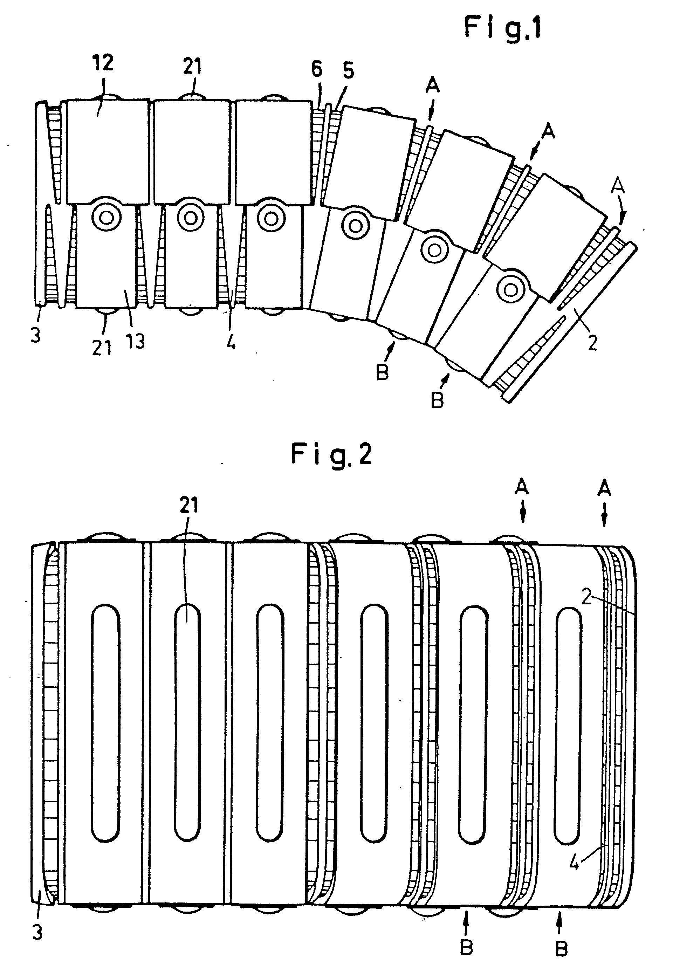

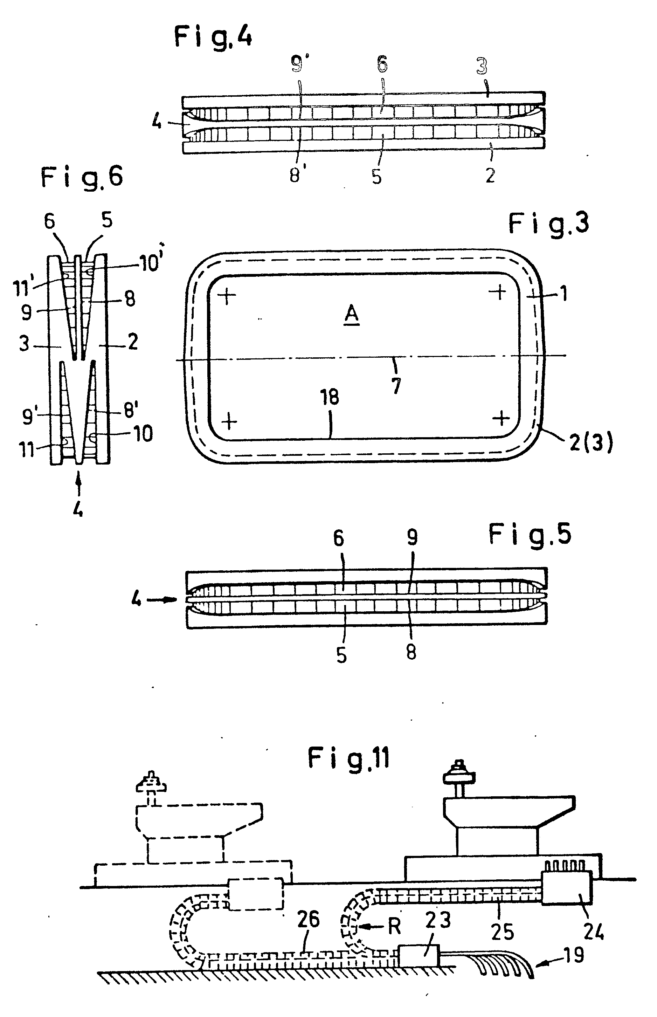

Im zusammengebauten Zustand können die engen Rohrglieder A und die weiten Rohrglieder B um die Breite einer Rinne 5 oder 6 gegeneinander verschwenkt werden. Dabei legen sich die Anschläge 14 und 15 der weiten Rohrglieder B in der in den Fig. 1 und 2, linke Hälfte, dargestellten gestreckten Lage oberhalb der neutralen Faser 7 gegen die parallel zueinander verlaufenden Flanken 8, 9 des Anschlagringes 4, während sie unterhalb der neutralen Faser 7 den parallel zueinander verlaufenden Flanken 10 und 11 der Anschläge 2 und 3 anliegen. In der in den Fig. 1 und 2, rechte Hälfte, dargestellten gekrümmten Lage dagegen legen sich die Anschläge 14 und 15 der weiten Rohrglieder B ober-

halb der neutralen Faser 7 gegen die konisch verlaufenden Flanken 10' und 11' der Anschläge 2 und 3, während sie unterhalb der neutralen Faser 7 den konisch verlaufenden Flanken 8' und 9' des Anschlagringes 4 anliegen. Der konische Verlauf der beiden Rinnen 5 und 6 an den beiden Seiten der Rinnen 5 und 6 des engen Rohrgliedes A und ihre unterschiedliche Ausbildung oberhalb und unterhalb der neutralen Faser 7 bewirken also, daß die Anschläge 14 und 15 der weiten Rohrglieder B in den beiden Endlagen den Anschlägen 2, 3 bzw. dem Anschlagring 4 der engen Rohrglieder A auf ihrer gesamten Länge satt anliegen.

Die engen Rohrglieder A bestehen vorzugsweise aus einem Isoliermaterial, insbesondere Kunststoff, so daß sie an ihrer Innenseite eine glatte und schonende Auflage 18 für Energieleitungen 19 bilden. Es ist aber auch möglich, am Ring 1 jedes engen Rohrgliedes A nach innen vorspringende Halterungen 20 anzuformen, um die Energieleitungen 19 in der bei einer Schwenkbewegung neutralen Faser 7 festzuhalten.

Die weiten Rohrglieder B werden zweckmäßig aus einem dünnen Blech gestanzt und geprägt. Dabei ist es möglich, in der Mitte der Rohrgliedhälften nach außen vorspringende Sicken 21 einzuprägen, welche einerseits die Formstabilität erhöhen und andererseits als Auflage für den Energieleitungsträger beim bestimmungsgemäßen Gebrauch dienen. Weiterhin ist es möglich, in die Schenkel der Rohrgliedhälften 12 und 13 Öffnungen 22 zur Belüftung des Innenraumes einzustanzen, damit sich kein Wärmestau bilden kann.

Ein nach den vorstehenden Anweisungen aufgebauter und zusammengesetzter Energieleitungsträger ist dazu bestimmt, zwischen einem ortsfesten Anschluß 23 und einem beweglichen Verbraucher 24, beispielsweise dem Support einer Werkzeugmaschine, eingesetzt zu werden, um die Energieleitungen 19, beispielsweise Kabel- und Schläuche für Elektrizität, Druckluft und/oder Kühlmittel, schonend und zugentlastet zu führen. Dabei muß der Energieleitungsträger im oberen Trum 25 selbsttragend sein, damit er nicht durchhängt und die Energieleitungen 19 geknickt werden. Zum unteren Trum 26 hin darf der Energieleitungsträger nur um einen Radius R gekrümmt werden können, welcher dem zulässigen Biegeradius der empfindlichsten Energieleitung 19 entspricht. Diese Bedingungen für eine selbsttragende Konstruktion des Energieleitungsträgers, die Einhaltung eines bestimmten Krümmungsradius sowie die schonende und zugentlastete Führung der Energieleitungen 19 werden durch die erfindungsgemäße Formgestaltung der engen Rohrglieder A und der weiten Rohrglieder B erfüllt.

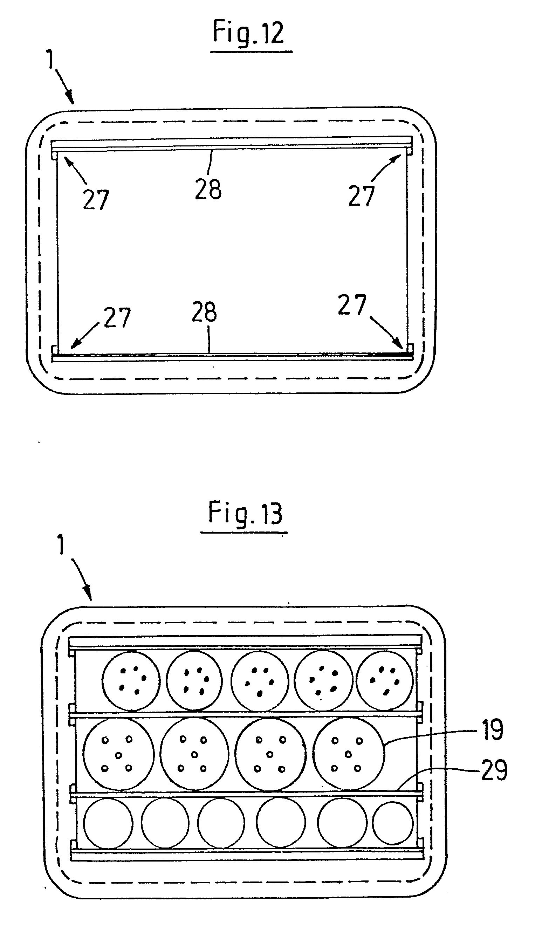

In der Ausführungsform gemäß Fig. 12 ist der Ring 1 an den Seitenwänden auf der Innenseite oben und unten mit Schlitzen 27 versehen, in die je ein über die gesamte Breite reichendes Band 28 mit seinen Rändern eingreift. Die Schlitze 27 sind in der Mitte enger als am Ein- und Austritt, damit die Bänder 28 beim Durchlaufen des Krümmungsbereiches nicht geknickt werden.

Bei der in Fig. 13 dargestellten Ausführungsform des Ringes 1 sind weitere Schlitze 27 vorgesehen, so daß mehrere Zwischenbänder 29 eingezogen werden können, welche den Innenraum des Energieleitungsträgers in verschiedene Stockwerke aufteilen. Dadurch ist es möglich, unterschiedlich dicke Energieleitungen 14 auch auf großen Längen sorgfältig voneinander getrennt zu halten, damit sie nicht durcheinanderrutschen.

Bezugszeichenliste

| 1 | Ring |
| 2 | Anschlag (äußerer) |
| 3 | Anschlag (äußerer) |
| 4 | Anschlagring |
| 5 | Rinne |
| 6 | Rinne |
| 7 | Faser |
| 8, 8' | Flanke |
| 9, 9' | Flanke |
| 10, 10' | Flanke |
| 11, 11' | Flanke |
| 12 | Rohrgliedhälfte |
| 13 | Rohrgliedhälfte |
| 14 | Anschlag |
| 15 | Anschlag |
| 16 | Ansatz |
| 17 | Spreizniet |
| 18 | Auflage |
| 19 | Energieleitung |
| 20 | Halterung |
| 21 | Sicke |
| 22 | Öffnung |
| 23 | Anschluß |
| 24 | Verbraucher |
| 25 | Trum |
| 26 | Trum |
| 27 | Schlitz |
| 28 | Band |
| 29 | Zwischenband |
| A | Rohrglied (enges) |
| B | Rohrglied (weites) |
| R | Krümmungsradius |

**Ansprüche**

1. Energieleitungsträger für die Anordnung zwischen einem beweglichen Verbraucher (24) und einem ortsfesten Anschluß (23), bestehend aus engen Rohrgliedern (A) mit nach außen gerichteten Anschlägen (2, 3) und weiten Rohrgliedern (B) mit nach innen gerichteten Anschlägen (14, 15), die sich hintergreifen und nur in einer Richtung gegeneinander abwinkelbar sind, wobei die engen Rohrglieder (A) in ihrer Mittelebene einen umlaufenden Anschlagring (4) besitzen, auf dessen beiden Seiten zu den äußeren Anschlägen (2, 3) hin Rinnen (5, 6) für den Eingriff der Anschläge (14, 15) an den weiten Rohrgliedern (B) gebildet sind, und wobei die weiten Rohrglieder (B) im Bereich einer Querschnittshälfte etwa um die Breite einer Rinne beidseitig verkürzt sind und aus zwei auf die engen Rohrglieder (A) aufschiebbaren Rohrgliedhälften (12, 13) zusammengesetzt sind, dadurch gekennzeichnet, daß der mittlere Anschlagring (4) der engen Rohrglieder (A) im Bereich der breiten Rohrgliedhälfte (12) parallele Flanken (8, 9) und im Bereich der schmalen Rohrgliedhälfte (13) an beiden Schenkeln zur neutralen Faser (7) hin konisch auseinanderlaufende Flanken (8', 9') besitzt und daß die äußeren Anschläge (2, 3) der engen Rohrglieder im Bereich der breiten Rohrgliedhälfte (12) an beiden Schenkeln von außen nach innen zur neutralen Faser (7) hin konisch auf den mittleren Anschlagring (4) zulaufende Flanken (10', 11') und im Bereich der schmalen Rohrgliedhälfte (13) parallel zueinander verlaufende Flanken (10, 11) besitzen.

2. Energieleitungsträger nach Anspruch 1, dadurch gekennzeichnet, daß die Breite der Rinnen (5, 6) an ihrem Ende beiderseits der neutralen Faser (7) der Dicke des Materials der weiten Rohrglieder (B) entspricht.

3. Energieleitungsträger nach den Ansprüchen 1 und 2, dadurch gekennzeichnet, daß der Krümmungsradius (R) durch eine Veränderung der Breite der äußeren Anschläge (2, 3) im Bereich der breiten Rohrgliedhälfte (12) und des Anschlagringes (4) im Bereich der schmalen Rohrgliedhälfte (13) an den engen Rohrgliedern (A) veränderbar ist.

4. Energieleitungsträger nach den Ansprüchen 1 bis 3, gekennzeichnet durch in den Seitenwänden der engen Rohrglieder (A) auf der Innenseite angeordnete Schlitze (27) und in diese im Abstand voneinander und parallel zueinander eingezogene Bänder (28).

5. Energieleitungsträger nach Anspruch 4, dadurch gekennzeichnet, daß die Schlitze (27) und Bänder (28) an der Ober- und Unterseite der engen Rohrglieder (A) angeordnet sind.

6. Energieleitungsträger nach den Anspruch 5, gekennzeichnet durch ein oder mehrere Zwischenbänder (29).

7. Energieleitungsträger nach den Ansprüchen 4 bis 6, dadurch gekennzeichnet, daß die Schlitze (27) am Eintritt und Austritt erweitert sind.

8. Energieleitungsträger nach den Ansprüchen 4 bis 7, dadurch gekennzeichnet, daß die Bänder (28) aus Stahl oder Kunststoff bestehen.

## Claims

1. An energy line carrier for mounting between a mobile user apparatus (24) and a stationary connector (23), consisting of narrow tubular elements (A) with outwardly directed abutments (2, 3) and wide tubular elements (B) with inwardly directed abutments (14, 15), which engage with each other in series and are flexible relative to each other only in one direction, the narrow tubular elements (A) having in their centre plane a circumferential abutment ring (4), on both sides of which there are provided channels (5, 6) extending towards the outer abutments (2, 3) and engaged by the abutments (14, 15) on the wide tubular elements (B), the wide tubular elements (B) being foreshortened on both sides in the region of one half of their cross-section by approximately the width of a channel and comprising two tubular element halves (12, 13) which are slidable on the narrow tubular elements (A), characterised in that the central abutment ring (4) of the narrow tubular elements (A) comprises parallel flanks (8, 9) in the region of the broad tubular element halves (12), and, in the region of the narrow tubular element halves (13), flanks (8', 9') which on both sides diverge in the direction of the neutral axis, and the outer abutments (2, 3) of the narrow tubular elements comprise on both sides, in the region of the broad tubular element halves (12), flanks (10', 11') which extend taperingly towards the central abutment ring (4) in the direction from the outside towards the neutral axis, and further comprise flanks (10, 11) which extend parallel to each other in the region of the narrow tubular element halves (13).

2. An energy line carrier as claimed in claim 1, characterised in that the width of the channels (5, 6) at their ends on both sides of the neutral axis (7) is equal to the thickness of the material of the wide tubular elements (B).

3. An energy line carrier as claimed in claims 1 and 2, characterised in that the radius of curvature (R) can be varied by varying the width of the outer abutments (2, 3) in the region of the broader tubular element halves (12), and of the stop ring (4) in the region of the narrow tubular elements halves (13) at the narrow tubular elements (A).

4. An energy line carrier as claimed in claims 1 to 3, characterised by slots (38) disposed on the inside in the side walls of the narrow tubular elements (A), and strips (28) inserted therein spaced apart from and parallel to each other.

5. An energy line carrier as claimed in claim 4, characterised in that the slots (27) and strips (28) are disposed on the upper side and lower side of the narrow tubular elements (A).

6. An energy line carrier as claimed in claim 5, characterised by one or more intermediate strips (29).

7. An energy line carrier as claimed in claims 4 to 6, characterised in that the slots (27) are widened at their inlet and outlet.

8. An energy line carrier as claimed in claims 4 to 7, characterised in that the strips (28) are of steel or plastics.

## Revendications

1. Support de conducteurs d'énergie pour la disposition entre un organe utilisateur mobile (24) et une connexion (23) à position fixe, constitué par des éléments tubulaires étroits (A) avec des butées (2, 3) dirigées vers l'extérieur des éléments tubulaires larges (B), avec des butées (14, 15) dirigées vers l'intérieur, ces éléments étant en prise l'un derrière l'autre et ne pouvant s'orienter angulairement que dans un sens l'un par rapport à l'autre, les éléments tubulaires étroits (A) présentant dans leur plan moyen un anneau de butée en faisant le tour (4) sur les deux côtés duquel sont formées des rainures (5, 6) dirigées vers les butées extérieures (2, 3) pour la mise en prise des butées (14, 15) des éléments tubulaires larges (B), les éléments tubulaires larges (B) étant raccourcis des deux côtés sensiblement de la largeur d'une rainure dans le domaine d'une demi-section et étant composés de deux moitiés (12, 13) d'éléments tubulaires s'emboîtant sur les éléments tubulaires étroits (A), caractérisé en ce que l'anneau de butée moyen (4) des éléments tubulaires étroits (A) présente des flancs parallèles (8, 9) dans le domaine des moitiés d'éléments tubulaires larges (12) et des flancs (8', 9') s'écartant l'un de l'autre de manière conique vers la fibre neutre (7) en formant deux branches dans le domaine des moitiés d'éléments tubulaires étroites (13) et en ce que les butées extérieures (2, 3) des éléments tubulaires étroits présentent dans le domaine des moitiés d'éléments tubulaires larges (12) des flancs (10', 11') dirigés de l'extérieur vers l'intérieur vers la fibre neutre (7) de manière conique vers l'anneau de butée moyen (4) en formant deux branches et des flancs (10, 11) s'étendant parallèlement entre eux dans le domaine des moitiés d'éléments tubulaires étroites (13).

2. Support de conducteurs d'énergie selon la revendication 1, caractérisé en ce que la largeur des rainures (5, 6) à leur extrémité des deux côtés de la fibre neutre (7) correspond à l'épaisseur de la matière des éléments tubulaires larges (B).

3. Support de conducteurs d'énergie selon les revendications 1 et 2, caractérisé en ce que le rayon de courbure (R) est variable grâce à une variation sur les éléments tubulaires étroits (A) de la largeur des butées extérieures (2, 3) dans le domaine des moitiés d'éléments tubulaires larges (12) et de l'anneau de butée (4) dans le domaine des moitiés d'éléments tubulaires étroites (13).

4. Support de conducteurs d'énergie selon les revendications 1 à 3, caractérisé par des fentes (27) disposées dans les parois latérales des éléments tubulaires étroits (A) sur la face intérieure et par des bandes (28) insérées dans ces fentes à distance l'une de l'autre et parallèlement entre elles.

5. Support de conducteurs d'énergie selon la revendication 4, caractérisé en ce que les fentes (27) et les bandes (28) sont disposées sur le côté supérieur et le côté inférieur des éléments tubulaires étroits (A).

6. Support de conducteurs d'énergie selon la revendication 5, caractérisé par une ou plusieurs bandes intermédiaires (29).

7. Support de conducteurs d'énergie selon les revendications 4 à 6, caractérisé en ce que les fentes (27) sont élargies à l'entrée et à la sortie.

8. Support de conducteurs d'énergie selon les revendications 4 à 7, caractérisé en ce que les bandes (28) sont constituées en acier ou en matière plastique.

Fi g.1

Fi g.2

Fig.4

Fig.6

Fig.3

Fig.5

Fig.11

Fig.7

Fig.8

Fig.9

Fig.10

Fig.12

Fig.13